# EUROPÄISCHE PATENTSCHRIFT

(11) **EP 2 489 997 B1**
(45) Veröffentlichungstag und Bekanntmachung des Hinweises auf die Patenterteilung: **30.05.2018**
(21) Anmeldenummer: 12000925.3
(22) Anmeldetag: 13.02.2012
(51) Int. Cl.: G01G 21/28, G06F 3/048, G06F 3/01

(54) **Bedienvorrichtung für eine Waage**
Operating device for a weighing machine
Dispositif de commande pour une balance

(30) Priorität: 19.02.2011 DE 102011011817
(43) Veröffentlichungstag der Anmeldung: 22.08.2012
(73) Patentinhaber: Bizerba SE & Co. KG, 72336 Balingen (DE)
(72) Erfinder: Mößmer, Harmy, 72393 Burladingen (DE); Steinhilber, Ralf, 72336 Balingen (DE)
(74) Vertreter: Huber, Meik

(56) Entgegenhaltungen:
- EP-A1- 1 691 263
- EP-A1- 2 211 153
- WO-A1-2004/081776
- US-A1- 2004 104 896
- US-A1- 2006 026 521

## Beschreibung

Die Erfindung betrifft eine Bedienvorrichtung für eine Waage, der im Oberbegriff des Patentanspruchs 1 genannten Art.

Solche Bedienvorrichtungen sind beispielsweise aus der DE 100 63 537 C1 bekannt. Sie zeigt einen Anzeige- und Bedienkopf für eine elektronische Waage. Der Anzeige- und Bedienkopf weist einen Anzeigebereich auf, in dem beispielweise verschiedene Werte oder Menüs mit Auswahllisten angezeigt werden können. Zur Bedienung wird vorgeschlagen, dass der Bedienkopf an einer ersten Seite einen Drehknopf, mit dem beispielsweise durch Auswahllisten gescrollt werden kann, und an einer der ersten Seite gegenüberliegenden zweiten Seite eine Quittiertaste aufweist. Zusätzlich sind noch weitere Tasten vorgesehen.

Die EP 2 211 153 A1 zeigt eine Ladenwaage mit Anzeigevorrichtung. Die Anzeigevorrichtung ist mit einem Touchscreen zur Bedienung der Ladenwaage ausgestattet. Der Touchscreen dient sowohl zur Anzeige als auch zur Eingabe von Daten und/oder Informationen.

Dies hat den Nachteil, dass das Gehäuse des Bedienkopfes nicht oder nur mit sehr großen Aufwand wasserdicht gestaltet werden kann, da für den Drehknopf und die Tasten Öffnungen im Gehäuse vorgesehen sein müssen. Eine hygienische Reinigung beispielsweise mit einem Hochdruckreiniger oder Chemikalien ist deshalb nicht möglich. Um hohe Hygienestandards einzuhalten, sind jedoch entsprechende Reinigungsmöglichkeiten erforderlich.

Aufgabe der Erfindung ist deshalb eine kostengünstige und benutzerfreundliche Bedienvorrichtung für eine Waage zu schaffen, die auf einfache Art und Weise hygienisch gereinigt werden kann und insbesondere eine ergonomische Bedienoberfläche aufweist.

Diese Aufgabe wird durch eine Bedienvorrichtung für eine Waage gemäß Patentanspruch 1 gelöst.

Um eine Bedienvorrichtung für eine Waage der eingangs genannten Art zu schaffen, die kostengünstig und benutzerfreundlich zu bedienen ist und auf einfache Art und Weise hygienisch gereinigt werden kann, ist erfindungsgemäß vorgesehen, dass die Bedienvorrichtung einen berührungsempfindlichen Bedienbereich aufweist, der einen Quittierbereich und wenigstens einen Slidingbereich aufweist, wobei der wenigstens eine Slidingbereich um den Quittierbereich herum kreisförmig oder sternförmig angeordnet ist. Ein Slidingbereich ist eine zusammenhängende berührungsempfindliche Fläche, bei der durch Berühren und gleichzeitigem Verfahren, beispielsweise mit einem Finger oder einem Bedienstift, unterschiedliche Parameter einstellbar oder auswählbar sind. Ein Quittierbereich ermöglicht den ausgewählten Parameter durch einfaches Berühren zu quittieren.

Die Anordnung des Slidingbereich kreisförmig oder sternförmig um den Quittierbereich herum hat den Vorteil, dass der Quittierbereich im Zentrum des Slidingbereichs angeordnet ist und sich so eine selbsterklärende Bedienung mit kurzen Bedienwegen ergibt. Der Slidingbereich kann aus einer kreisförmigen Fläche bestehen, in deren Zentrum der Quittierbereich angeordnet ist. Der Slidingbereich kann jedoch auch mehrere einzelne Slidingflächen aufweisen, die sternförmig, insbesondere radial nach außen verlaufend, um den zentral angeordneten Quittierbereich herum angeordnet sind.

Ein berührungsempfindlicher Bedienbereich kann insbesondere mit einem Touch-Screen verwirklicht werden. Dies hat den Vorteil, dass zur Bedienung keine mechanischen Bedienelemente, wie Tasten oder Drehknöpfe erforderlich sind. Bei mechanischen Bedienelementen findet bei einer Betätigung der Bedienelemente durch einen Benutzer eine Relativbewegung von Bedienelement zu Gehäuse der Bedienvorrichtung statt. Hierfür weist das Gehäuse Ausnehmungen auf, innerhalb denen die mechanischen Bedienelemente angeordnet sind. In einen deshalb zwischen Gehäuse und mechanischem Bedienelement entstehenden Spalt kann beispielsweise Feuchtigkeit eindringen und die Elektronik der Bedienvorrichtung beschädigen, Der berührungsempfindliche Bedienbereich weist keine mechanischen, bewegbaren Bedienelemente auf, so dass die Bedienvorrichtung wasserdicht ist und so auch mit Wasser oder Chemikalien unter Hochdruck gereinigt werden kann. Die erfindungsgemäße Bedienvorrichtung weist einen sehr hohe Dichtigkeit und Robustheit auf.

In einer vorteilhaften Weiterbildung der Erfindung, ist der Bedienbereich als resistives, kapazitives oder induktives System ausgebildet.

Resistive System bestehen aus zwei elektrisch leitfähigen Schichten, die einen Spannungsteiler bilden, an dem ein elektrischer Widerstand gemessen wird. Durch Berührung, beispielsweise mit einem Finger oder einer Spitze eines Stifts, werden die beiden Schichten durch den leichten Druck stellenweise verbunden, wobei durch die Messung des elektrischen Widerstandes die Position der Druckstelle ermittelt werden kann.

Kapazitive System weisen meist zwei mit Metalloxid beschichteten Glasplatte auf. Die Beschichtungen sind so ausgebildet, dass sich Kreuzungspunkte bilden, die wie Kondensatorplatten wirken. Sobald eine elektrische Spannung angelegt wird, entstehen elektrische Felder. Bei Berührung mit einem Finger, wird hierdurch das elektrische Feld an der Berührungstelle verändert und durch Messung der Ströme kann der Berührungspunkt ermittelt werden.

Induktive Systeme weisen mehrere Antennenspulen und ein Eingabegerät mit einem auf die Antennenspulen abgestimmten Resonanzkreis auf. Durch Messung der durch den Resonanzkreis aufgenommenen und anschließend abgestrahlten Energie kann die Position des Eingabegerätes ermittelt werden.

Durch die Ausbildung des Bedienbereichs als resistives, kapazitives oder induktives System kann die Position eines Eingabegerätes, beispielsweise eines Stiftes, oder eines Fingers ermittelt werden, um so in Abhängigkeit von der ermittelten Position bestimmte Funktionen auszuführen.

Besonders vorteilhaft ist es, den Bedienbereich als kapazitives System auszubilden, da so eine exakte Bedienung mit einem Finger ohne Kraftaufwand möglich ist.

Erfindungsgemäß kann auch vorgesehen sein, dass der Bedienbereich eine Oberflächengeometrie zur haptischen Rückmeldung aufweist, da so die Benutzung des Bedienbereichs vereinfacht wird.

Die Oberflächengeometrie kann beispielsweise so gestaltet sein, dass die Bedienvorrichtung im Bereich des berührungsempfindlichen Bedienbereichs eine im Wesentlichen ringförmige Erhebung aufweist. Hierdurch ist der berührungsempfindliche Bedienbereich einerseits durch Ertasten leicht aufzufinden und andererseits ermöglicht die runde Form eine intuitive Bedienung derart, dass durch eine Kreisbewegung beispielsweise eines Fingers auf der Erhebung durch ein im Anzeigebereich dargestelltes Menü gescrollt werden kann oder angezeigte Werte, Parameter oder markierte Bereiche in einer Auswahlliste in die eine oder andere Richtung verändert werden können. Zusätzlich kann innerhalb der ringförmigen Erhebung eine weitere Erhebung angeordnet sein, die in ihrer Form an eine Taste erinnert und die beispielsweise eine Quittierfunktion ausgelöst werden kann.

Die Oberflächengeometrie kann auch pfeilförmige oder quadratische Erhebungen aufweisen, denen bestimmte Funktionen zugeordnet sind.

Neben Erhebungen sind auch andere Oberflächengeometrien zur haptischen Rückmeldung denkbar. Beispielsweise kann die Oberfläche im Bedienbereich aufgeraut, kugelförmig, glatt usw. sein

Erfindungsgemäß könnte eine Rückmeldung an den Benutzer auch durch Vibration erfolgen.

Von Vorteil ist auch, wenn die die Oberflächengeometrie durch Aktoren, insbesondere Piezoelemente veränderbar ist, da so die Oberflächengeometrie jederzeit variabel an verschiedene Bediensituationen anpassbar ist. Beispielweise können durch die Aktuatoren Schalterelemente nachgebildet werden und/oder eine Finger-Führung des Benutzers erfolgen.

Optisch gut zu erkennen ist der Bedienbereich, falls er farblich abgesetzt ist, insbesondere einen Aufdruck aufweist. Der Aufdruck kann beispielsweise Pfeile, Plus- und Minus-Zeichen, Balken oder sonstige Hinweise, die die Bedienung vereinfachen, aufweisen.

In einer Ausführung ist vorgesehen, dass der Bedienbereich nur bedarfsweise angezeigt wird. Insbesondere ist ein Steuergerät zur Steuerung des Displays vorgesehen, welches den Bedienbereich dann anzeigt, wenn eine Eingabe verschiedene Möglichkeiten umfasst oder wenn Parameter eingegeben werden müssen. So steht normalerweise die gesamte Displayfläche, bzw. der gesamte Displaybereich als Informationsanzeige zur Verfügung. Im Bedarfsfall unterteilt das Steuergerät die Anzeigefläche in Informationsanzeigebereich und Bedienbereich.

Besonders vorteilhaft ist, wenn der Bedienbereich im Bereich der Anzeigevorrichtung, insbesondere neben einem Menu oder einem alphanumerischen Anzeigefeld angeordnet ist. Der Bedienbereich kann zusätzlich zumindest teilweise, insbesondere im Überdeckungsbereich mit der Anzeigevorrichtung, durchsichtig ausgebildet sein. Hierdurch können dem Bedienbereich situationsbedingt unterschiedliche Funktionen zugeordnet sein. Beispielsweise können zur Eingabe von Zahlen auf der Anzeigevorrichtung Zahlenfelder dargestellt sein und bei Berühren des entsprechend zugeordneten, über der angezeigten Zahl liegenden Bedienbereichs wird die dort angezeigte Zahl übernommen. Es können aber auch verschiedene Auswahlmöglichkeiten eines Menüs angezeigt werden und durch Antippen des entsprechenden Menüpunktes wird die Auswahl übernommen. Des Weiteren ist es möglich die Bedienung an Links- und Rechtshänder anzupassen, da einzelne oder alle Bedienfunktionen einfach "gespiegelt" werden können.

Insbesondere ist ein Steuergerät vorgesehen, welches die Bedienvorrichtung ansteuert, vorzugsweise das Display bzw. dessen Bedienoberfläche grafisch ansteuert. Das Steuergerät kann den Bedienbereich benachbart zu einem Anzeigebereich konditioniert von einem oder mehreren Vorbedingungen dann anzeigen, wenn Parameter aus einem Menu auszuwählen und/oder frei einzugeben sind. Von Vorteil ist, wenn das Steuergerät das Menu und/oder den Parameter in dem Anzeigebereich gleichzeitig mit der Auswahl des Parameters mittels einer Slidingfläche anzeigt, vorzugsweise durch farbliche Markierung oder Fettschrift hervorgehoben anzeigt. Bei Quittierung des Parameters wird dieser dann als Eingabe bzw. Wert übernommen.

Erfindungsgemäß ist auch vorgesehen, dass die Bedienvorrichtung eine Kalibriervorrichtung zur Anpassung der Ansprechempfindlichkeit des Bedienbereichs aufweist, da so die Ansprechempfindlichkeit auf einfache Weise an den Benutzer anpassbar ist.

Des Weiteren ist vorgesehen, dass die Bedienvorrichtung ein Bussystem zur Verbindung mit der Waage aufweist. Das Bussystem kann beispielsweise als Lokal Area Network, Wireless Lokal Area Network, als ein Feldbus, insbesondere Profibus oder Ethernet ausgebildet sein. Hierdurch kann die Bedienvorrichtung von der Waage beabstandet angeordnet sein. Die ist insbesondere bei sehr großen Waagen vorteilhaft.

Eine Anwendung der Bedienvorrichtung kann bei Ladenwaagen oder auch bei dynamischen Waagen oder statischen Waagen oder auch wägebasierten Dosiersystemen für Industrieapplikationen erfolgen.

Weitere Vorteile, Merkmale und Einzelheiten der Erfindung ergeben sich aus der nachfolgenden Beschreibung bevorzugter Ausführungsbeispiele sowie anhand der Zeichnungen.

Dabei zeigen:
- Fig. 1:: Eine Ladenwaage mit einer Bedienvorrichtung,
- Fig. 2:: Die Bedienvorrichtung und
- Fig. 3:: Eine weitere erfindungsgemäße Bedienvorrichtung.

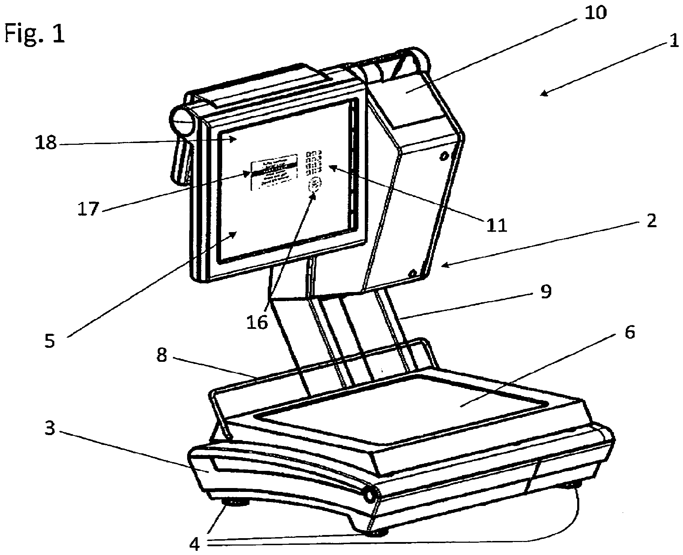

Figur 1 zeigt eine Ladenwaage 1 mit einem Gehäuse 2. Das Gehäuse 2 weist eine Basis 3 auf, an deren Unterseite höhenverstellbare Gehäusefüße 4 angeordnet sind. Durch die Höhenverstellbarkeit der Gehäusefüße 4 kann die Ladenwaage 1 auch auf unebenen Flächen waagerecht aufgestellt werden. Das Gehäuse 2 nimmt verschieden Komponenten wie beispielsweise eine Elektronik, einen Lastaufnehmer oder einen Drucker 10 auf. Eine Bedienvorrichtung 5 mit einem Touch Screen als Display 18 ist im oberen Bereich des Gehäuses 1 schwenkbar und verrastbar gelagert. Ein Benutzer der Waage kann so die Bedienvorrichtung 5 verstellen, damit diese für ihn optimal erreichbar ist und eine Anzeigevorrichtung 7 gut eingesehen werden kann. Durch eine Verrastung wird die Bedienvorrichtung 5 in der durch den Benutzer eingestellten Position fixiert. In der Basis 3 ist eine Wägezelle als Lastaufnehmer angeordnet. Die Wägezelle ist mit einer Lastplatte 6 verbunden. Auf die Lastplatte 6 kann das Wiegegut aufgelegt werden. Das Gewicht des Wiegeguts ist so über die Wägezelle ermittelbar und wird auf der Anzeigevorrichtung 7 der Bedienvorrichtung 5 angezeigt. Ein innerhalb des Gehäuses angeordnetes Steuergerät, welches der Übersichtlichkeit halber nicht dargestellt ist, steuert die Anzeige der Bedienvorrichtung 5. Im hinteren Bereich der Lastplatte 6 ist ein Bügel 8 angeordnet, der verhindert, dass das Wiegegut nach hinten übersteht oder nach hinten wegrutschen kann. Als hinten oder hinterer Bereich ist der Bereich der Waage zu verstehen, der dem Benutzer der Waage, der vor dieser steht, abgewandt ist. An der Basis 3 ist hinten rechts eine Säule 9 angeordnet, die die Basis 3 mit der Bedienvorrichtung 5 verbindet. Des Weiteren kann an der Säule 9 ein Drucker 10 angeordnet sein. Die Säule 9 ist so ausgebildet, dass sie im Bereich der Lastplatte 6 von dieser beabstandet verläuft, damit auch leicht überstehendes Wiegegut die Säule 9 nicht berührt.

Die Darstellung der Erfindung anhand einer Ladenwaage zeigt eine mögliche Ausgestaltung der Erfindung. Die Erfindung kann darüber hinaus auch in anderen Waagen oder in Bedienterminals mit Anschluss an Wiegesysteme Anwendung finden.

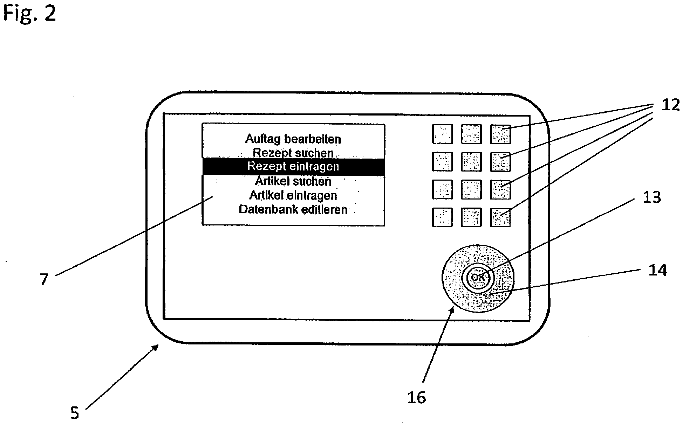

Figur 2 zeigt die Bedienvorrichtung 5 mit der Anzeigevorrichtung 7. Auf der Anzeigevorrichtung 7 sind in der linken Seite des Displays in einem Anzeigebereich 17 listenartig verschiedene Auswahlmöglichkeiten eines Menüs dargestellt. Im rechten Bereich der Bedienvorrichtung 5 ist ein berührungsempfindlicher Bedienbereich 11 angeordnet. Der Bedienbereich 11 ist zur Erleichterung der Eingabe über eine Bedienlogik dargestellt. Die Darstellung wird von dem Steuergerät als berührungsempfindliche Bedienoberfläche generiert und stellt zwölf quadratische Tasten 12, und einen ringförmigen Slidingbereich 14 und in dessen Zentrum eine runde, mit "OK" beschriftete Taste 13 und ein ringförmiges Berührfeld 14 dar. Durch diese Darstellung soll der Benutzer an bereits bekannte Bedienvorrichtungen mit mechanischen Tasten erinnert werden, um so die Benutzerakzeptanz für die neue Bedienvorrichtung zu erhöhen. Die quadratischen Tasten 12, die runde Taste 13 und die ringförmige Slidingfläche 14 können strukturiert, insbesondere leicht erhaben ausgebildet sein, um die Benutzerfreundlichkeit zu erhöhen. Die ringförmige Slidingfläche 14 kann so mit dem Steuergerät zusammenwirken, dass durch eine Kreisbewegung eines Fingers, insbesondere eines Daumens, in der Anzeigevorrichtung 7 angezeigte Werte, Parameter oder markierte Bereiche in Auswahllisten in Abhängigkeit von der Drehrichtung verändert werden. So kann beispielsweise eine stufenlose Navigation durch Listen erfolgen. Die runde Taste 13 ist dem ringförmigen Berührfeld 14 als Quittiertaste zugeordnet. Besonders vorteilhaft kann der runden Taste 13 eine Auswahlfunktion zugeordnet sein.

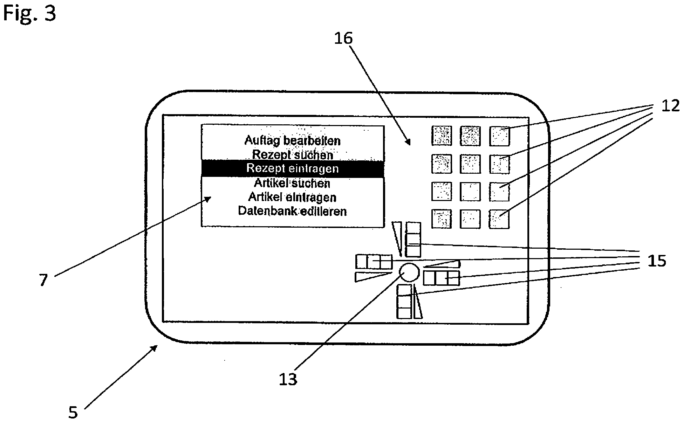

Figur 3 zeigt eine weitere erfindungsgemäße Bedienvorrichtung 5, wobei der Bedienbereich 11 einen andere Bedienoberfläche als in Fig. 2 aufweist. Statt einer ringförmigen Slidingfläche 14 ist eine sternförmige Anordnung von mehreren Slidingflächen 15 vorgesehen. Die Quittiertaste 13 ist im Zentrum der Slidingflächen 15 angeordnet. Zur Veränderung der in der Anzeigevorrichtung 7 angezeigten Werte, Parameter oder des markierten Bereichs in Auswahllisten können die Slidingflächen 15 mit dem Finger berührt und dann der Finger unter Beibehaltung der Berührung noch oben, unten, links oder rechts geschoben werden. Dementsprechend wird beispielsweise ein angezeigter Wert erhöht oder verringert bzw. ein darüber- oder darunterliegender Menüpunkt ausgewählt.

Der Bedienbereich 11 ist in den Figuren 2 und 3 im rechten Bereich der Bedienvorrichtung 5 angeordnet. Für Linkshänder beispielsweise kann der Bedienbereich 11 auch im linken Bereich der Bedienvorrichtung angeordnet sein.

### Bezugszeichenliste

- 1: Ladenwaage
- 2: Gehäuse
- 3: Basis
- 4: Gehäusefüße
- 5: Bedienvorrichtung
- 6: Lastplatte
- 7: Anzeigevorrichtung
- 8: Bügel
- 9: Säule
- 10: Drucker
- 11: Bedienbereich
- 12: quadratische Tasten
- 13: OK-Taste
- 14: ringförmige Slidingfläche
- 15: Slidingfläche
- 16: Slidingbereich
- 17: Anzeigebereich, Menu

## Patentansprüche

1. Bedienvorrichtung für eine Waage (1) mit einem Display (18), welches einen Anzeigebereich (17) zur Anzeige von Wiegeergebnissen und einen berührungsempfindlich ausgebildeten Bedienbereich (11) umfasst,
**dadurch gekennzeichnet, dass**
der berührungsempfindliche Bedienbereich (11) einen Quittierbereich (13) und einen Slidingbereich (16) aufweist, wobei der Slidingbereich zum Auswählen unterschiedlicher Parameter eine oder mehrere kreisförmig oder sternförmig um den Quittierbereich (13) herum angeordnete Slidingfläche bzw. Slidingflächen (14, 15) aufweist und der Quittierbereich zum Quittieren des ausgewählten Parameters durch einfaches Berühren ausgebildet ist, und dass
das Display (18) eine Kalibriervorrichtung zur Anpassung der Ansprechempfindlichkeit des Bedienbereichs (11) aufweist.

2. Bedienvorrichtung nach Anspruch 1,
**dadurch gekennzeichnet, dass**
das Display (18) als Touch-Screen, insbesondere als resistiver, kapazitiver oder induktiver Touch-Screen ausgebildet ist.

3. Bedienvorrichtung nach Anspruch 1 oder 2,
**dadurch gekennzeichnet, dass**
das Display (18) eine strukturierbare Oberflächengeometrie zur haptischen Rückmeldung aufweist.

4. Bedienvorrichtung nach Anspruch 3,
**dadurch gekennzeichnet, dass**
die Oberflächengeometrie durch Aktoren, insbesondere Piezoelemente veränderbar ist.

5. Bedienvorrichtung nach einem der vorhergehenden Ansprüche,
**dadurch gekennzeichnet, dass**
der Bedienbereich (11) farblich abgesetzt ist, insbesondere einen Aufdruck aufweist.

6. Bedienvorrichtung nach einem der vorhergehenden Ansprüche,
**dadurch gekennzeichnet, dass**
der Bedienbereich (11) zumindest teilweise im Bereich der Anzeigevorrichtung (7) angeordnet ist.

7. Bedienvorrichtung nach einem der vorhergehenden Ansprüche,
**dadurch gekennzeichnet, dass**
die Bedienvorrichtung (5) ein Steuergerät aufweist, welches den Bedienbereich (11) nur bedarfsweise anzeigt.

8. Bedienvorrichtung nach Anspruch 7,
**dadurch gekennzeichnet, dass**
die das Steuergerät ein Bussystem zur Verbindung mit der Waage (1) aufweist.

9. Bedienvorrichtung nach Anspruch 7 oder 8,
**dadurch gekennzeichnet, dass**
das Steuergerät den Bedienbereich (11) benachbart zu einem Anzeigebereich (7) dann anzeigt, wenn Parameter aus einem Menu auszuwählen und/oder frei einzugeben sind, wobei das Steuergerät das Menu und/oder den Parameter in dem Anzeigebereich anzeigt, vorzugsweise durch farbliche Markierung oder Fettschrift hervorgehoben anzeigt.

## Claims

1. Operating device for scales (1) having a display (18) which comprises a display region (17) for displaying weighing results and a touch-sensitive operating region (11),
**characterized in that**
the touch-sensitive operating region (11) has an acknowledgement region (13) and a sliding region (16), the sliding region having one or more sliding area(s) (14, 15) arranged around the acknowledgement region (13) in a circular or star-shaped manner for the purpose of selecting different parameters, and the acknowledgement region being designed to acknowledge the selected parameter by means of simple touch, and **in that** the display (18) has a calibration device for adapting the response sensitivity of the operating region (11).

2. Operating device according to Claim 1, **characterized in that**
the display (18) is in the form of a touchscreen, in particular a resistive, capacitive or inductive touchscreen.

3. Operating device according to Claim 1 or 2, **characterized in that**
the display (18) has a structurable surface geometry for haptic feedback.

4. Operating device according to Claim 3, **characterized in that**
the surface geometry can be changed by means of actuators, in particular piezo elements.

5. Operating device according to one of the preceding claims,
**characterized in that**
the operating region (11) is of contrasting colour, in particular has an imprint.

6. Operating device according to one of the preceding claims,
**characterized in that**
the operating region (11) is at least partially arranged in the region of the display device (7).

7. Operating device according to one of the preceding claims,
**characterized in that**
the operating device (5) has a control unit which displays the operating region (11) only if necessary.

8. Operating device according to Claim 7, **characterized in that**
the control unit has a bus system for connection to the scales (1).

9. Operating device according to Claim 7 or 8, **characterized in that**
the control unit displays the operating region (11) adjacent to a display region (7) when parameters are to be selected from a menu and/or are to be freely input, the control unit displaying the menu and/or the parameter in the display region, preferably in a manner highlighted by means of coloured marking or bold print.

## Revendications

1. Ensemble de commande d'une balance (1), l'ensemble présentant un affichage (18) qui comporte une partie d'affichage (17) qui affiche des résultats de pesée et une partie tactile de commande (11),
**caractérisé en ce que**
la partie tactile de commande (11) présente une partie de confirmation (13) et une partie coulissante (16),
**en ce que** la partie coulissante présente plusieurs surfaces coulissantes (14, 15) disposées en cercle ou en étoile autour de la partie de confirmation (13) pour sélectionner différents paramètres et la partie de confirmation est configurée pour confirmer le paramètre sélectionné par simple contact et
**en ce que** l'affichage (18) présente un ensemble d'étalonnage qui permet d'adapter la sensibilité de réaction de la partie de commande (11).

2. Ensemble de commande selon la revendication 1, **caractérisé en ce que** l'affichage (18) est configuré comme écran tactile et en particulier comme écran tactile résistif, capacitif ou inductif.

3. Ensemble de commande selon les revendications 1 ou 2, **caractérisé en ce que** l'affichage (18) présente une surface à géométrie structurée permettant une rétroaction tactile.

4. Ensemble de commande selon la revendication 3, **caractérisé en ce que** la géométrie de surface peut être modifiée par des actionneurs et en particulier des piézo-éléments.

5. Ensemble de commande selon l'une des revendications précédentes, **caractérisé en ce que** la partie de commande (11) est colorée et présente en particulier une impression.

6. Ensemble de commande selon l'une des revendications précédentes, **caractérisé en ce que** la partie de commande (11) est disposée au moins en partie au niveau de l'ensemble d'affichage (7).

7. Ensemble de commande selon l'une des revendications précédentes, **caractérisé en ce que** l'ensemble de commande (5) présente un appareil de commande qui n'indique la partie de commande (11) qu'en cas de besoin.

8. Ensemble de commande selon la revendication 7, **caractérisé en ce que** l'appareil de commande présente un système de bus assurant la liaison avec la balance (1).

9. Ensemble de commande selon les revendications 7 ou 8, **caractérisé en ce que** l'appareil de commande affiche la partie de commande (11) à côté d'une partie d'affichage (7) lorsque des paramètres doivent être sélectionnés dans un menu et/ou introduits librement, l'appareil de commande affichant le menu et/ou le paramètre dans la partie d'affichage de préférence par repérage coloré ou mise en caractère gras.
